Europäisches Patentamt

European Patent Office

Office européen des brevets

(11) Publication number: 0 204 994
A2

# EUROPEAN PATENT APPLICATION

(21) Application number: 86106719.7

(22) Date of filing: 16.05.86

(51) Int. Cl.4: G06F 15/40

(30) Priority: 11.06.85 US 743557

(43) Date of publication of application:
17.12.86 Bulletin 86/51

(84) Designated Contracting States:
DE FR GB IT

(71) Applicant: International Business Machines
Corporation
Old Orchard Road
Armonk, N.Y. 10504(US)

(72) Inventor: Bartocci, Francis Dennis
2434 Northern Hill Ct.
Rochester Minnesota 55904(US)
Inventor: Won, Joha Hyun
24, Sedgewood Road
Chapel Hill North Carolina 27514(US)
Inventor: Singh, Harinder S.
1722 Kirkaldy Lane
Boca Raton Florida 33434(US)
Inventor: Gopal, Inder
60, Hauen Ave. NR 19E
New York N.Y. 10032(US)

(74) Representative: Bonin, Jean-Jacques
Compagnie IBM France Département de
Propriété Intellectuelle
F-06610 La Gaude(FR)

(54) Generalized directory data model.

(57) A generalized directory data model is provided for use in storing, in a directory database, mappings of information related to names and the like, the directory data base being a set of directories containing information of a similar type. The directory data model includes a user data component; a user data descriptor component; and an operation control block component; the user data component providing a model for collection of user data elements; the user data descriptor component describing the user data component and containing data element format information, identification and allocation information, and data access control information; and the operation control block component containing information for controlling those directory system functions to be performed on behalf of a particular user, the operation control block component including search and update algorithm control information and internal tables defining the relationship of the particular member user directory with other member user directories within a particular directory database.

STRUCTURE

FIG. 1

## GENERALIZED DIRECTORY DATA MODEL

CROSS REFERENCE TO RELATED APPLICATIONS

The following copending applications, all filed by the same applicant as the present application, are related to the subject matter of this application, in that they each relate to different aspects of a directory database system.

(A1) "PROPAGATION APPARATUS FOR NET-WORK QUERIES THROUGH SUPERIOR-SUBOR-DINATE AND PEER-PEER DATA DISTRIBUTION RELATIONSHIPS", Application N°

(A2) "GENERALIZED ALGORITHMIC CONTROL BLOCKS FOR SEQUENTIAL AND PARALLEL QUERIES IN DISTRIBUTED DIRECTORY NETWORKS", Application N°

(A3) "DYNAMIC UPDATE OF DATABASE DIRECTORIES USING DIRECTED OR UNDIRECTED MECHANISMS", Application N°

(A4) HYBRID DIRECTORY DATA DISTRIBUTION SCHEMES FOR NETWORK TOPOLOGIES", Application N°

All of these applications (filed concurrently with the present application) are incorporated herein by reference.

BACKGROUND OF THE INVENTION

Field of the Invention

This invention relates to a directory data model for use with a directory database to facilitate user access. In the present application the term "directory" means a table of names and corresponding items of data. Data in a directory is locational or directive in nature, e.g.

(1) a listing of names, addresses, and other data about a specific group of persons or organizations, or

(2) an index that is used by a control program to locate one or more blocks of data stored in separate areas of a data set in direct access storage, or

(3) an index to locate blocks of program information.

The user of a directory knows the definition of the object references by a name, but needs the specific data value(s), e.g. phone number, in order to perform a specific activity.

Prior Art

Distributed database management systems offer users the ability to distribute data and workload among multiple processing sites. Ideally, a distributed database management system should support growth while preserving local administrative autonomy and control of access to locally stored data. At the same time, the distributed database should provide its users with a single system image such that, although the data is distributed among several sites, the data distribution is transparent to the users who express their database accesses as though the data is at one place.

It is important to preserve the local autonomy of database administrators and users at each site of the distributed database while, at the same time, supporting information sharing among sites. It is to be expected that the equipment supporting the database at different sites will be controlled by different administrative entities. This expectation increases as the entry costs for computing facilities decline. Increased distribution of computing facilities leads to additional requirements for information sharing between sites to support the shared objectives and interests of the users at different sites. Therefore, credible access control mechanisms must be provided to insure isolation, when desired, and to control access to the shared information. At the same time, users must be able to easily access and manipulate remote data as though it were local.

The distributed database management system architecture should preserve local control and function when accessing local database objects. The fact that a site participates in the distributed database should not reduce that site's ability to perform local actions on local data by requiring the participation of other sites. Also, data access availability should be a function only of the availability of the site(s) storing that data objects. The failure of one site should not impact sites which do not reference database objects stored (or controlled) by the failed site.

Finally, it must not be difficult for an existing database site to join the distributed database. It should be fairly easy for an existing database site to establish the ability to access data at another site. The addition of another site to the distributed database must not require a nationwide (or global) system generation.

U.S. Patent 4,468,728 discloses a data structure and a search method for a database management system in which the data structure is arranged in a plurality of search trees. The initial search tree and an initial subset of trees are maintained in a main fast access memory, while the remaining trees are kept in mass memory. An input search parameter is partitioned into a plurality of subparameters, one for each search tree. The subparameters are used to search a tree in each level of the data structure until the location of a terminating file is determined.

An article entitled "Object Naming and Catalog Management For a Distributed Database Manager", Lindsay, 1981 IEEE, page 31, describes a system in which distribution of the catalog representation and maintenance leads to an architecture which supports transparent user access to data which may be distributed, replicated, and partitioned among the site of the distributed system. The architecture preserves individual site autonomy while facilitating graceful system growth.

SUMMARY OF THE INVENTION

The directory data model of the present invention is an essential part of any directory scheme in a given network environment. As indicated above, a directory is a database that stores mappings from name to information related to the name. The directory database is a set of directories which contain information of a similar type. There is more than one member in the set if the directory database is distributed across the network.

The directory data model defines the structure of the directory database member at a particular Directory Service Unit (DSU) and its relationship with other members in the directory database. The present directory data model is comprised of three component parts :

User data

User Data Descriptor

Operation Control Block

All parts need not be present at a particular DSU, since some DSU's may not have user data, or may not be involved in query or update propagation. The user data component provides a model for a collection of user data elements. The user data descriptor component describes the user data component, and contains data element format information, identification and allocation information, and data access control information. Since a design goal of the directory data model is data independence, the user defines the semantics of user data, the specification of field names, and the format of the data element.

The operation control block contains information which controls those directory system functions performed on behalf of the user. This component includes search and update algorithm control information, and internal tables which define the relationship of this member user directory with other members (at other DSU's) within a particular directory database. Further, a particular DSU may support multiple directory data models and each data model is identified by a unique directory type ID.

BRIEF DESCRIPTION OF THE DRAWINGS

Fig. 1 is a block diagram of the overall structure of the system of the present invention.

Fig. 2 is a block diagram showing the general structure of the directory function service.

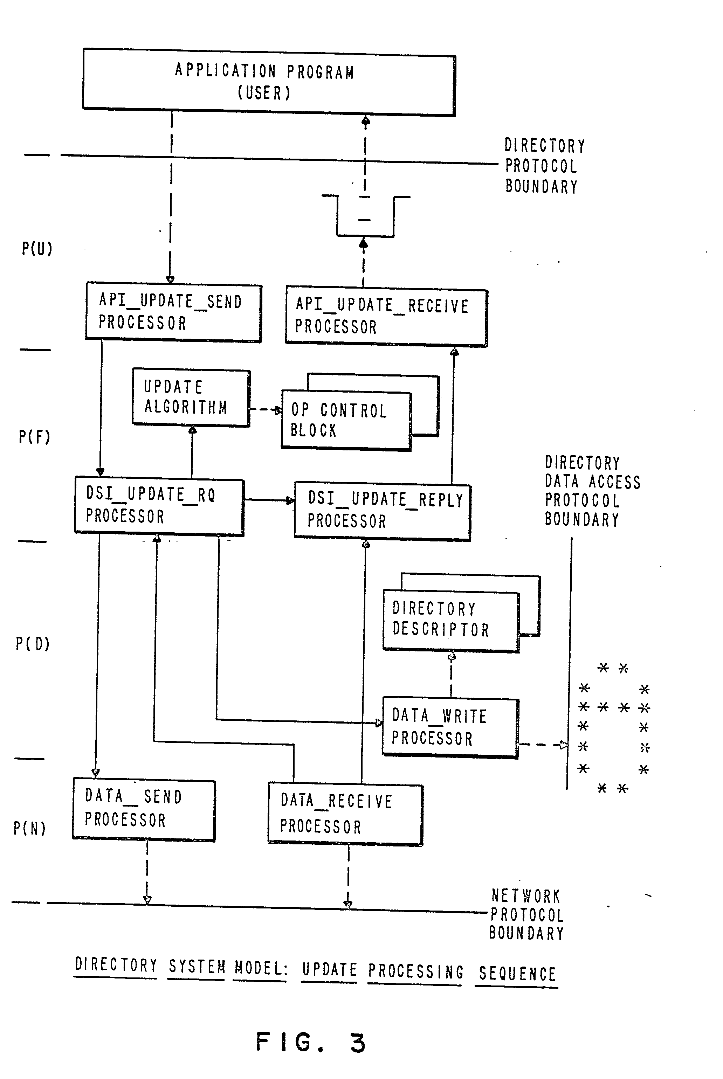

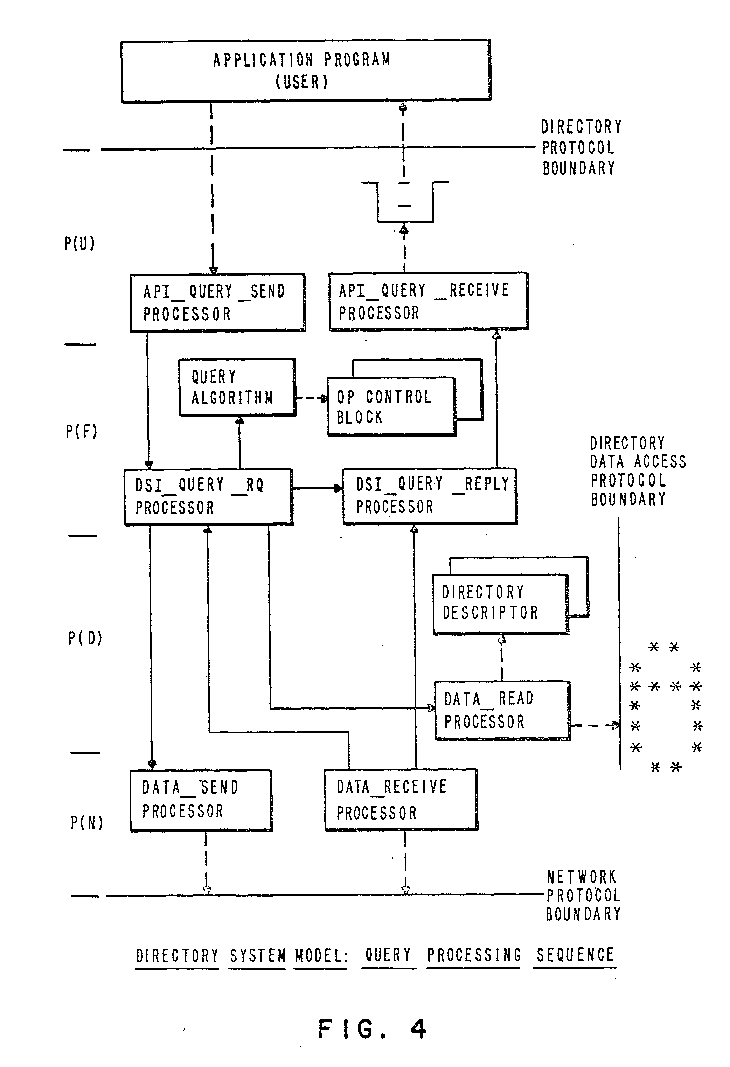

Fig. 3 and 4 illustrate the processing sequences for update and query propagation, respectively, in accordance with the present invention.

Fig. 5 is a representation of a directory user data model.

Fig. 6 represents the directory user data descriptor of the present data model.

Fig. 7 illustrates typical data element format and field definitions; and

Fig. 8 shows a directory operation control block used in the present invention.

DESCRIPTION OF THE PREFERRED EMBODIMENT

In the description and drawings, the following terms are used with the indicated meanings:

Application Interface (API) -The protocol boundary between the user and directory service.

Directory Service Interface (DSI) -The internal interface between directory service units and outside services, such as communication, user services or user data areas.

Directory Service System (DSS) -An instance of directory service in a given network of distributed directory services.

Directory Service Unit (DSU) -A unit of DSS that provides one or more directory service functions.

Prior to a detailed description of the present invention, the following overview of the environment and elements of the invention are given.

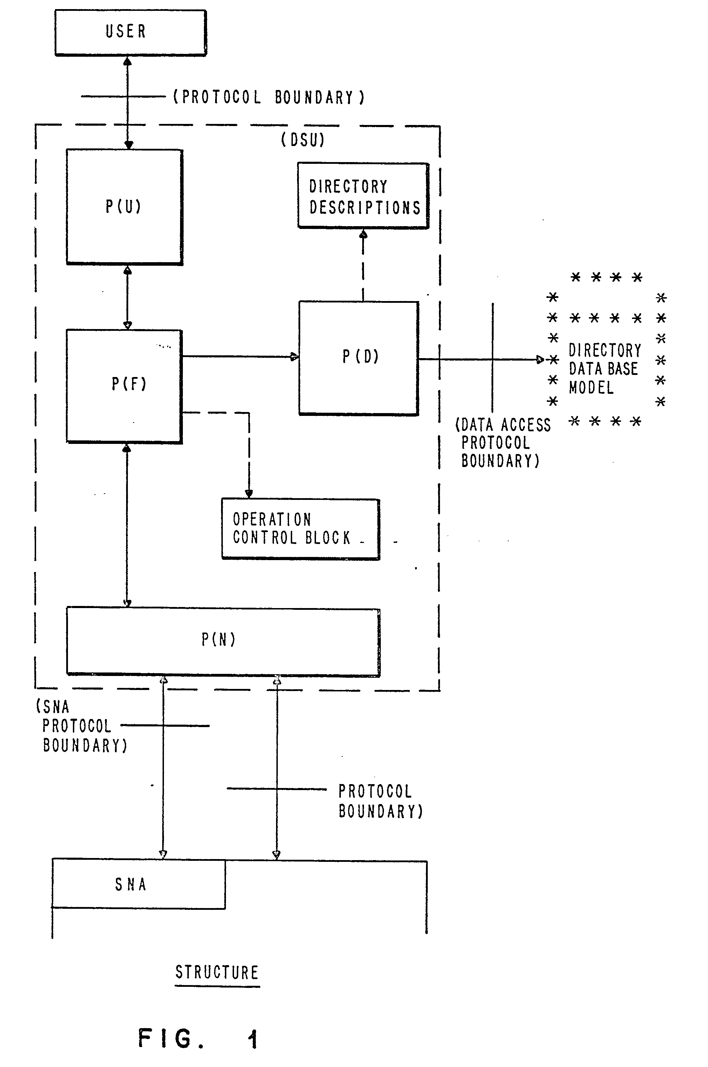

The basic structure of the directory database system of the present invention is shown in Fig. 1. Fig. 1 illustrates the different interfaces or protocol boundaries between the DSU shown in the dotted enclosure and other portions of the system. These boundaries include a user protocol boundary shown at the top of the figure, a data access protocol boundary at the right side of the figure representing the interface between the DSU and the database, and a communications protocol boundary illustrated at the bottom of the figure.

The present structure and method is based on a distribution scheme where an instance of directory service may include one or more DSUs. Each DSU may perform one or more directory functions depending upon the product implementation.

The directory service system (DSS) shown in Figure 1 is an installation of directory functions in a network of interconnected system. DSS provides the architectural directory services for the user at the API protocol boundary. The participating systems (products) in a DSS operate coherently under the architected rules such as data distribution - schemes, naming schemes, search/update algorithms, error recovery, synchronization and the like.

A DSS is comprised of a collection of directory service units distributed throughout the interconnected system network. A DSU represents the directory service component of a system product implementing directory service functions. Although multiple DSUs may exist in the same system - (product) for different directory applications, it is the intent that a single DSU can support many applications programs to eliminate duplication.

DSU Functions

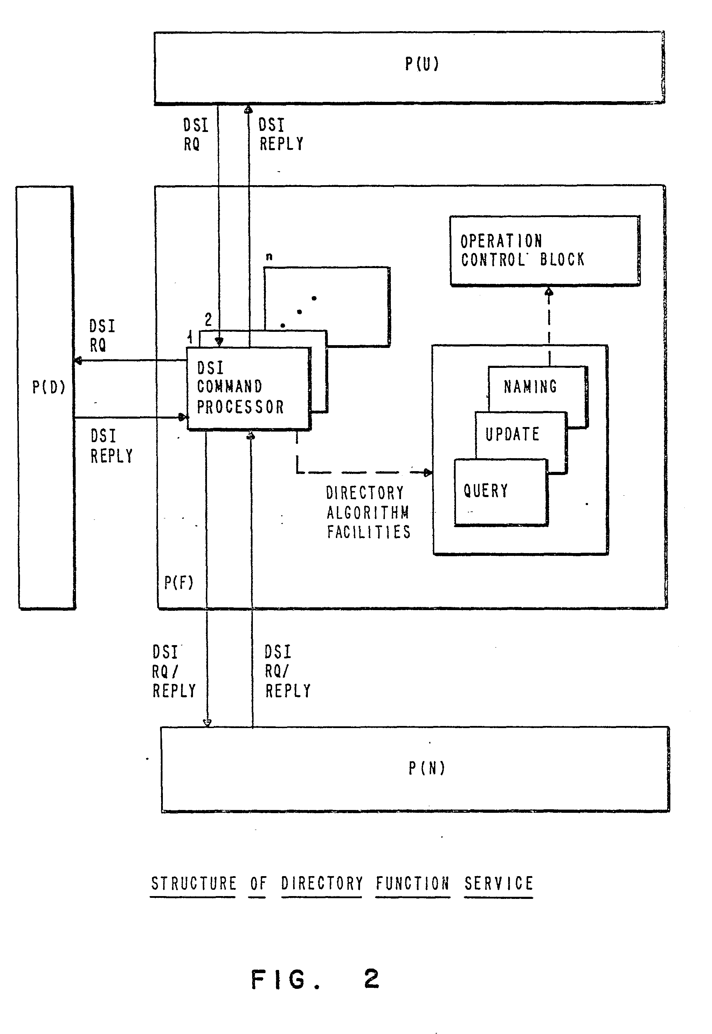

A DSU is composed of a set of functional components called directory service processes - (DSP) to provide the subsetting basis for implementation by products. There are the following four types of DSPs, as shown in Fig. 2, each of which performs distinct functions.

1. User Service Process, denoted as P(U) or U, manages the interface (protocol boundary) with users.

2. Directory Function Process, denoted as P-(F) or F, processes the directory functions to service the directory request using the algorithms - (query/update/naming).

3. Directory Data Service, denoted as P(D) or D, manages the access and maintenance of the directory data.

4. Network Service Process, denoted as P(N) or N, manages the transport network facilities to communicate with other DSUs.

The structure and function of these DSPs are described in detail in above cited copending application A1.

In order to obtain full directory service, it is not necessary that every DSU in the system implement all DSPs. For example, a work-station may implement only some of the functions and obtain full directory service through interaction with a larger system product. Thus, a DSU may contain all four DSPs or some of the DSPs as necessary to meet the functional needs of each product.

USER DATA MODEL

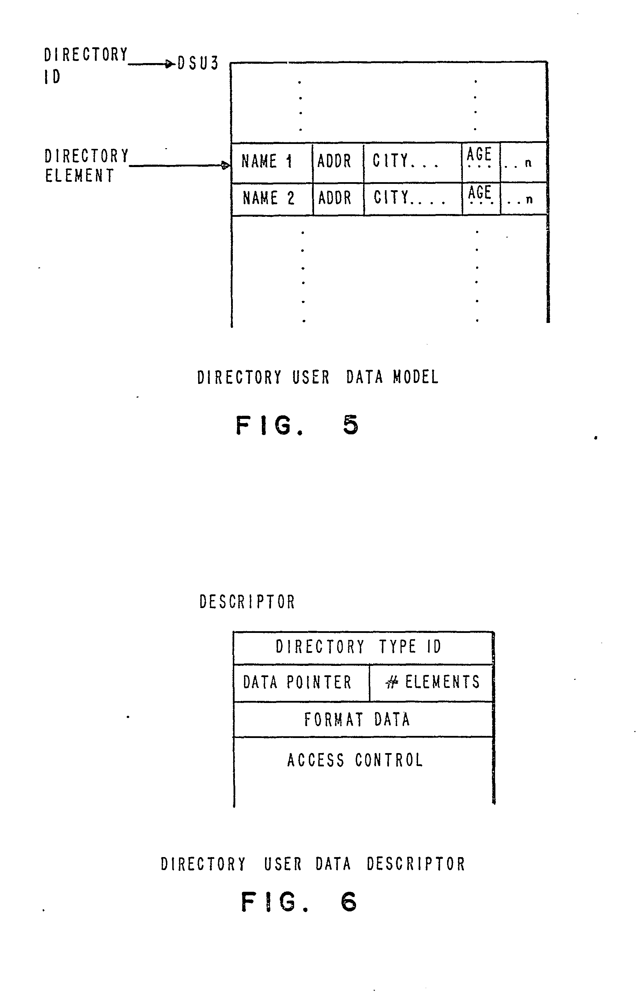

Fig. 5 depicts the user data component. This collection of directory data elements (a member of the directory database) is referenced by a named directory identifier (ID). In this model, user data is comprised of data elements, each having multiple fields of arbitrary length. The data element is segmented into fields to facilitate use of defaults and reference of fields by means of their specified field names through commands at the user protocol boundary.

The user data model supports inverted search, since any logical field can be the input search argument. Further, the user data model supports partial input search and result argument specification by the user. This allows string matching on a contiguous string.

The user data model supports generic string matches. The user can specify partial information for the input search argument, and parameters which may limit the search; element data which matches the "ambiguous name" will be returned some ways in which search may be limited are : resolve the first match only, or at a particular user database member location, or within the entire user data directory database (all locations where members exist), or resolve to all matches within a particular member location or within the directory database.

USER DATA DESCRIPTOR

The user data descriptor (Fig. 6) describes user data and those access controls particular to this member of the directory database. The scope of access control is that of the entire user data object rather than that of the data element. The user data descriptor includes the directory type ID, which names the directory database, a user data pointer, an indication of the number of elements which comprise this member, format data, and access control. These can be described as follows :

Directory Type ID

The directory type ID names the directory database. All members in a given directory database are referenced by the same directory ID name.

User Data Pointer

This is location dependent address information used to direct access at this DSU to user data.

Number of Elements

The number of elements data value is the maximum number of elements that this user data member can contain.

Format Data

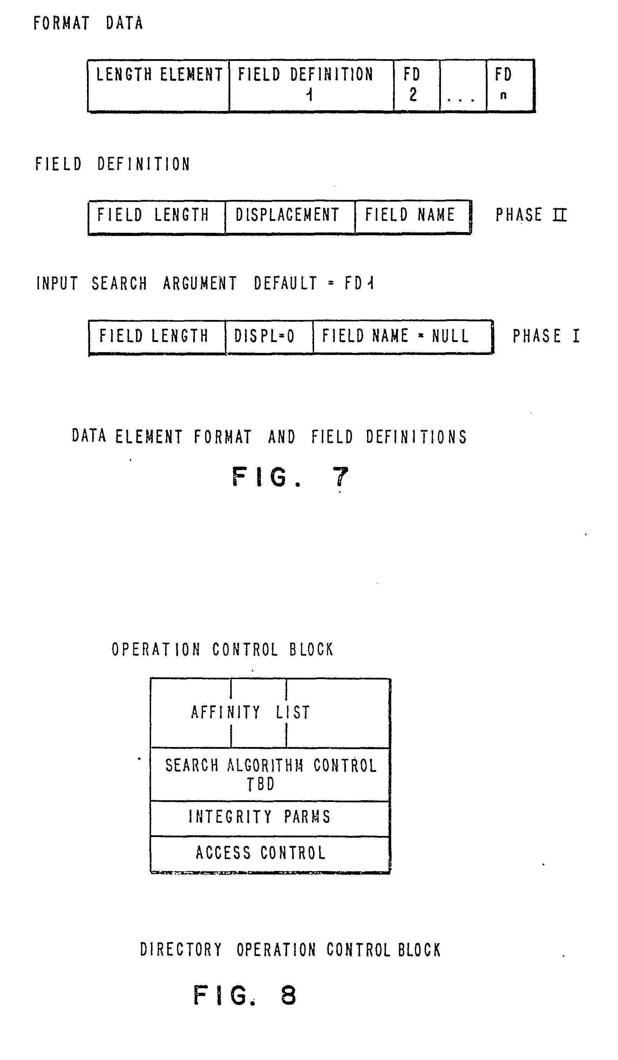

The format data field is shown in more detail in Fig. 7. This field supplies descriptive information for the user directory data element. The format data field is comprised of multiple sub-fields; element length sub-field and field definition sub-fields. Field definition 1 describes the input search argument default to be the definition used when the input search argument is not explicitly specified through the protocol boundary.

The fields in Fig. 7 can be described as follows :

Length Element

The length element is the length in bytes of a fixed length directory element.

Field Definition

This field describes a named field within the user directory data element in terms of its length, its displacement from the beginning of the data element, and its name. This will enable reference by name to particular fields within the data element through the protocol boundary. The fields may be accessed via names and/or displacements.

Input Search Argument Default Field (FD1)

This field is a special field definition which describes the default to be used when the input search argument is not explicitly specified through the protocol boundary. The default input search argument can be any contiguous string within the data element.

Access Control

The access control field is an optional field which supports the level of user data object access control. The function of the access control field is to limit access to this member of the directory database. Support includes access for read and update on the basis of read and write authority. This can be made as granular as a particular implementation requires.

DIRECTORY OPERATION CONTROL BLOCK

The directory operation control block shown in Fig. 8 supports directory system services such as automatic search and automatic maintenance to the user. This control block is associated with a particular member of the directory database and the information contained therein is location dependent. This control block is usually initialized by means of directory system generation parameters, although changes to internal operation of the directory system for this member may occur dynamically through the protocol boundary. Additional details of the function of the operation control block are given in the above reference copending application (A2).

The directory operation control block contains the affinity list, search algorithm control field, integrity parameters field, and access control field, which can be described as follows :

Affinity List

The affinity list describes the logical relationship between this member and other members of a particular directory database. This relationship is used by the automatic search algorithm to direct the search among member DSUs. For automatic update, this relationship is used to determine where the directory user data is replicated so that updates can occur transparently to the user.

The affinity list data values describe whether other directory database members are superiors, peers, or subordinates to this member, as described in more detail in the above referenced copending Patent Applications (A1) and (A3). The manner in which directory data is distributed and logically configured can therefore be derived from affinity list data values. A consequence of affinity list design enables a reconfiguration of user data - (say, from a centralized to a distributed configuration) by subsequent changes to affinity list data values, and the search update algorithms which operate on those affinity list data values continue to operate unaffected.

Search Algorithm Control

This field supports various user options of the automatic name resolution function. Such options may include actions to be taken by the DSU upon determining a "not found" condition at this member, such as report of an "error", continue searching using internal search algorithm, or return a data value to the user. A cascaded search is possible using participating members affinity tables. Similarly, some members which may not support this capability can terminate the search form beyond this point; this may be useful to support products of varying capabilities in a depth-first search algorithm.

Integrity Parameters

Degrees of error tolerance, or of consistency of user data within the distributed directory database, are supported by means of the integrity parameters field. This field supports these options which control the operation of automatic update/maintenance. Options will be related to data integrity levels: from the highest levels, (for example, make this change everywhere, immediately, with commitment) to the lowest levels, (for example, don't bother to propagate the update from this point on).

Some examples of directory function implementation describing the directory data model in accordance with the present invention are :

UPDATE FUNCTION

| | |
|---|---|
| FRANK | DEPTD330739 |
| JOHA | DEPTD330767 |
| LARRY | DEPTD331891 |

0   A     7                          25

Search Default Field

Update Examples

```
MODIFY ELEMENTS     DIRID(D33)     DIRLOC(DSU1)
LEVEL(*FIRST) SEARCHFLD(5,0,LARRY)
REPFLD(4,7,2317)
FEEDBACK(08013,RTVAR,WUE13)
```

| | | |
|---|---|---|
| BEFORE | LARRY | DEPTD331981 |
| | | |
| AFTER | LARRY | DEPTD332317 |

A    Field that was replaced

Upon execution, this will replace the phone number 1981 of the element "LARRY" with 2317.

QUERY FUNCTION

<u>Current Directory</u>

DIRID=D33        DIRLOC=DSU1

0        7                    25

| | |
|---|---|
| JOHA | DEPTD33DSAAUSTIN |

| | |
|---|---|
| FRANK | DEPTD33DSAAUSTIN |

| | |
|---|---|
| LANDRY | DEPTD33DIAAUSTIN |

| | |
|---|---|
| HARISH | CHICAGO |

<u>Query Example</u>

1.   FIND ELEMENTS DIRID(D33) SEARCH(FRANK) FEEDBACK
     (080017,RTVAR,QUE17)
This verb will be executed as :
FIND_ELEMENTS        DIRID(D33)        SEARCHFLD(7,0,FRANK)
FEEDBACK(080017 + RTVAR,QUE17) RESULTFLD(25,0)
DIRLOC(*SYSTEM) LEVEL(*FIRST)
The results that are enqueued are :
RESULT=DEPTD33DSAAUSTIN,    DIRECTORY   =   D33,    DIRECTORY
LOCATION=DSU1

2.   FIND_ELEMENTS   DIRID(D33)   SEARCHFLD(3,7,DSA)   FEEDBACK
     (080018, +
     RTVAR,QUE18) RESULTFLD(7,9) LEVEL (*ALL)
The results that are enqueued are :
RESULT=JOHA, DIRECTORY=D33, DIRLOC=DSU°
     FRANK, DIRECTORY=D33, DIRLOC=DSU1

```
3.   FIND      ELEMENTS      DIRID(D33)      SEARCHFLD(LANDRY)
     FEEDBACK(080019,RTVAR,QUE20)
```

This verb will be executed as :

```
FIND_ELEMENTS DIRID(D33) SEARCHFLD(7.0.LANDRY
     FEEDBACK(080019,RTVAR,QUE20) RESULTFLD(25,)
     DIRLOC(*SYSTEM) LEVEL(*FIRST)
```

The results are :

```
RESULT = DEPTD33DIAAUSTIN, DIRID=D33, DIRLOC=DSU1
```

```
4.   FIND_ELEMENTS DIRID(D33) SEARCHFLD(D33DSA) FEEDBACK
     (080020,
     RTVAR,QUE20)
```

The result will be return code that the element was not found, since the D33DSA is not a default value in any element of the directory.

SUMMARY

The data model of the present invention provides complete data structure/format independence, regardless of the access methods, network topologies or user needs at a particular node - (location). This data model can be adapted to any directory service structure or implementation. In fact, this model can be further extended to include relational constructs. In addition, the present data model provides a basis for sub-setting and future migration of directory functions.

**Claims**

1. A generalized directory data model for use in storing, in a directory database, mappings of information related to names and the like, said directory database being a set of directories containing information of a similar type, said directory data model including :

a user data component;

a user data descriptor component; and

an operation control block component;

said user data component providing a model for collection of user data elements;

said user data descriptor component describing said user data component and containing data element format information, identification and allocation information, and data access control information; and

said operation control block component containing information for controlling those directory system functions to be performed on behalf of a particular user;

said operation control block component including search and update algorithm control information and internal tables defining the relationship of the particular member user directory with other member user directories within a particular directory database.

2. Apparatus in accordance with Claim 1 in which said internal tables define whether said particular user directory is a subordinate, a superior or a peer in relation to said other user directories.

3. Apparatus in accordance with Claim 1 in which said search and update algorithm information determines the actions to be taken by each of said directories when a "not found" condition occurs at any given one of said directories.

4. Apparatus in accordance with Claim 1 in which said operation control block contains integrity parameter information which determines the degree of further propagation of a directory update from each of said directories.

5. Apparatus in accordance with Claim 4 in which said integrity parameter information instructs one or more of said directories to propagate a directory update to all other directories.

6. Apparatus in accordance with Claim 4 in which said integrity parameter information instructs one or more of said directories not to propagate a directory update any further.

USER

(PROTOCOL BOUNDARY)

(DSU)

P(U)

DIRECTORY DESCRIPTIONS

P(F)

P(D)

* * * *

DIRECTORY DATA BASE MODEL

(DATA ACCESS PROTOCOL BOUNDARY)

OPERATION CONTROL BLOCK

P(N)

(SNA PROTOCOL BOUNDARY)

PROTOCOL BOUNDARY)

SNA

STRUCTURE

F I G.    1

STRUCTURE OF DIRECTORY FUNCTION SERVICE

FIG. 2

APPLICATION PROGRAM
(USER)

DIRECTORY
PROTOCOL
BOUNDARY

P(U)

API_UPDATE_SEND
PROCESSOR

API_UPDATE_RECEIVE
PROCESSOR

UPDATE
ALGORITHM

OP CONTROL
BLOCK

P(F)

DIRECTORY
DATA ACCESS
PROTOCOL
BOUNDARY

DSI_UPDATE_RQ
PROCESSOR

DSI_UPDATE_REPLY
PROCESSOR

DIRECTORY
DESCRIPTOR

P(D)

DATA_WRITE
PROCESSOR

DATA_SEND
PROCESSOR

DATA_RECEIVE
PROCESSOR

P(N)

NETWORK
PROTOCOL
BOUNDARY

DIRECTORY SYSTEM MODEL: UPDATE PROCESSING SEQUENCE

F I G. 3

DIRECTORY SYSTEM MODEL: QUERY PROCESSING SEQUENCE

F I G. 4

DIRECTORY
ID → DSU3

DIRECTORY
ELEMENT

| NAME 1 | ADDR | CITY... | AGE ... | ...n |
| NAME 2 | ADDR | CITY.... | AGE ... | ...n |

DIRECTORY USER DATA MODEL

# FIG. 5

DESCRIPTOR

| DIRECTORY TYPE ID | |
|---|---|
| DATA POINTER | # ELEMENTS |
| FORMAT DATA | |
| ACCESS CONTROL | |

DIRECTORY USER DATA DESCRIPTOR

# FIG. 6

FORMAT DATA

| LENGTH ELEMENT | FIELD DEFINITION 1 | FD 2 | . . . | FD n |
|---|---|---|---|---|

FIELD DEFINITION

| FIELD LENGTH | DISPLACEMENT | FIELD NAME | PHASE II |
|---|---|---|---|

INPUT SEARCH ARGUMENT DEFAULT = FD 1

| FIELD LENGTH | DISPL=0 | FIELD NAME = NULL | PHASE I |
|---|---|---|---|

DATA ELEMENT FORMAT AND FIELD DEFINITIONS

# FIG. 7

OPERATION CONTROL BLOCK

| AFFINITY LIST |
|---|
| SEARCH ALGORITHM CONTROL TBD |
| INTEGRITY PARMS |
| ACCESS CONTROL |

DIRECTORY OPERATION CONTROL BLOCK

# FIG. 8